# EUROPEAN PATENT SPECIFICATION

(11) **EP 2 581 676 B1**
(45) Date of publication and mention of the grant of the patent: **17.05.2023**
(21) Application number: 12187794.8
(22) Date of filing: 09.10.2012
(51) Int. Cl.: F24F 11/30, F24F 11/32, F24F 11/58, F24F 1/06

(54) **Air conditioning system**
Klimaanlage
Systeme de climatisation

(30) Priority: 10.10.2011 KR 20110103285
(43) Date of publication of application: 17.04.2013
(73) Proprietor: LG Electronics Inc., Seoul 150-721 (KR)
(72) Inventor: Jung, Seunghwan, Seoul (KR); Kim, Juntae, Seoul (KR)
(74) Representative: Vossius & Partner Patentanwälte Rechtsanwälte mbB

(56) References cited:
- EP-A2- 2 479 625
- KR-A- 20110 020 555
- US-A1- 2003 046 434

## Description

The present disclosure relates to an air conditioner for remotely upgrading an outdoor unit program without visiting the site, and an air conditioning system including the same.

In recent years, as building facilities are modernized, automatic control systems for automatically controlling sub-systems such as electric power, lighting, air conditioning, disaster prevention, crime prevention, and the like provided in a building have been expanded, and the development of a central monitoring system such a building management system (BMS) capable of integrating and managing such sub-systems as a whole has been actively carried out.

In general, an air conditioner has an indoor unit and an outdoor unit to perform cooling and heating cycles according to a user's request. At this time, the indoor unit and outdoor unit are connected through a refrigerant pipe. In recent years, an air conditioning system may be configured to include a plurality of multi air conditioners and a control device for controlling the plurality of multi air conditioners connected therebetween.

In recent years, an air conditioner is provided with an air conditioner controller or a gateway to enhance an efficiency of air conditioning management in public buildings such as a company, a school, or the like in which the air conditioner is provided. In other words, as the performance of an outdoor unit is improved, in recent years, there has been a tendency for the air conditioner that a large number of indoor units are commonly connected to the outdoor unit and a plurality of multi air conditioners are controlled in an integrated manner through the air conditioner controller. Furthermore, in recent years, an air conditioner is further provided with a remote central control server capable of remotely controlling multi air conditioners to control the multi air conditioners or monitor information on the status, operation and the like of the multi air conditioners through the remote control server.

In an air conditioner according to the related art, a dip switch is provided at a micom board of the outdoor unit to upgrade an outdoor unit program and execute the completely upgraded program. In other words, in the related art, the user or the like directly connects a communication line to the outdoor unit, and switches the mode using the dip switch, and then transmits an outdoor unit program to the outdoor unit to execute its upgrade, and then switches the mode using the dip switch again to execute the outdoor unit program. Furthermore, the user or the like resets the micom board subsequent to mode conversion such that the outdoor unit is operated in the switched mode.

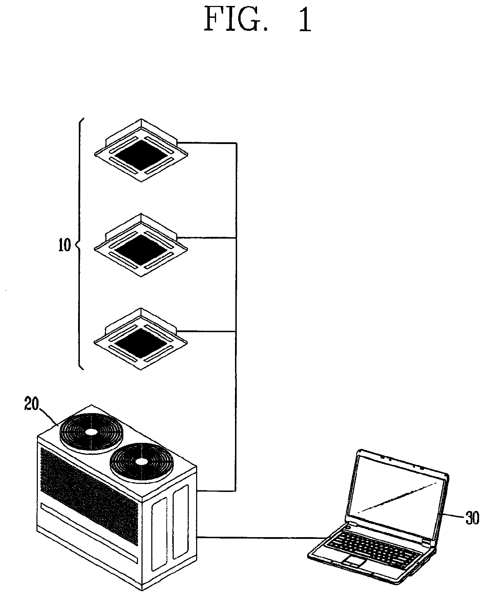

Accordingly, as illustrated in FIG. 1, in order to upgrade an outdoor unit program of the outdoor unit provided at the site, there is a burden for the user or the like to directly visit the site to connect the outdoor unit and outdoor unit program with a prestored device.

EP 2479625 A2 which has been cited under Article 54(3) EPC, relates to an air conditioner, a method for controlling outdoor units thereof, and a central control system having the same. A mode conversion unit such as a boot loader is provided to perform a mode conversion between a driving control mode and an upgrade mode in a software manner, without requiring a user's visit to the site.

KR 20110020555 A relates to an air-conditioner and an operation method thereof being provided to transmit update data to a unit without causing data loss within a limited air-conditioner network and to change the data of the unit.

An aspect of the present disclosure is to provide an air conditioning system in which an outdoor unit program can be easily upgraded by remote control in an air conditioner including a plurality of indoor units and one or more outdoor units for driving them, and an outdoor unit control method thereof.

Another aspect of the present disclosure is to provide an air conditioner for detecting an error occurred while remotely upgrading an outdoor unit program, and retransmitting the outdoor unit program when the error has occurred, and an air conditioning system including the same.

Still another aspect of the present disclosure is to provide an air conditioner capable of restoring an outdoor unit program when an error has occurred while remotely upgrading an outdoor unit program, and an air conditioning system including the same.

An air conditioner according to the invention is described in claim 1.

An outdoor unit control method of the air conditioning system according to an embodiment is provided in claim 8.

According to the embodiments of the present disclosure, a user or the like can easily upgrade an outdoor unit program without directly visiting the site. Furthermore, according to the embodiments of the present disclosure, outdoor unit programs provided in a plurality of outdoor units, respectively, can be upgraded at the same time.

According to the embodiments of the present disclosure, it may be possible to detect an error occurred while remotely upgrading an outdoor unit program and retransmit or restore the outdoor unit program when the error has occurred.

According to the embodiments of the present disclosure, it may be possible to prevent a malfunction of the outdoor unit and air conditioner that can be occurred according to an upgrade failure of the outdoor unit program, thereby improving the stability of the system. Furthermore, according to the embodiments of the present disclosure, it may be possible to reduce time required to upgrade the outdoor unit program, decrease the cost, and improve the user's convenience.

The accompanying drawings, which are included to provide a further understanding of the disclosure and are incorporated in and constitute a part of this specification, illustrate embodiments of the disclosure and together with the description serve to explain the principles of the disclosure.

In the drawings:
FIG. 1 is a view for explaining the operation of upgrading an outdoor unit program according to the related art;
FIGS. 2 and 3 are views schematically illustrating the configuration of an air conditioning system according to the embodiments of the present disclosure;
FIG. 4 is a block diagram illustrating the detailed configuration of an outdoor unit in an air conditioner according to an embodiment;
FIG. 5 is a view illustrating the detailed configuration of an outdoor unit and its connection relation to another device in an air conditioner according to another embodiment; and
FIGS. 6 and 7 are flow charts schematically illustrating a method of controlling an outdoor unit in an air conditioning system according to the embodiments of the present disclosure.

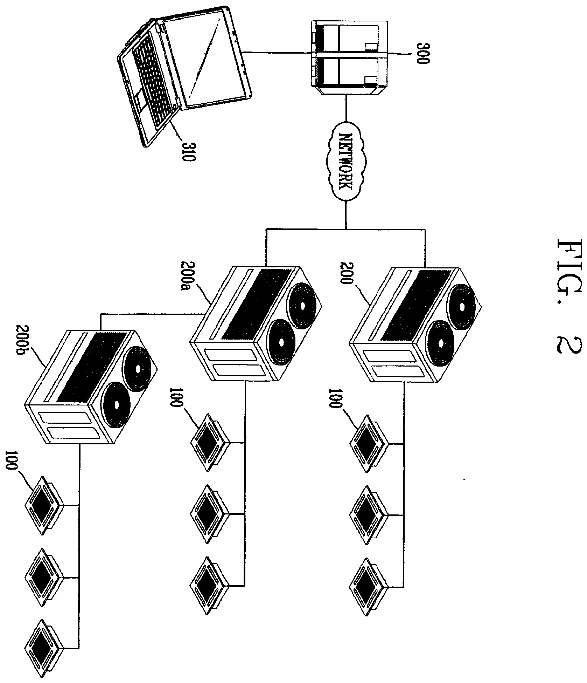

Referring to FIG. 2, an air conditioning system according to an embodiment may include an air conditioner including a plurality of indoor units 100, and a plurality of outdoor units 200 configured to drive the plurality of indoor units using an outdoor unit program so as to perform air conditioning, and a central control server 300 configured to form a communication network with the air conditioner, and transmit upgrade data for the outdoor unit program to part or all of the plurality of outdoor units to upgrade the outdoor unit program.

The outdoor unit 200 may be configured with one outdoor unit or configured with two or more outdoor units 200a, 200b connected therebetween. At this time, one or two or more indoor units are connected to each outdoor unit.

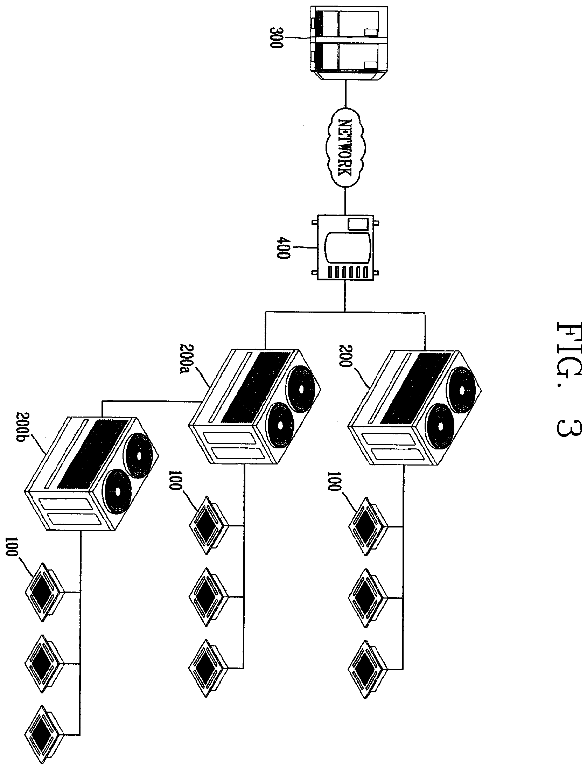

Referring to FIG. 3, an air conditioning system according to another embodiment may further include a gateway 400 provided between the central control server and the air conditioner such that the central control server directly upgrades the outdoor unit program or configured to receive the upgrade data from the central control server to upgrade the outdoor unit program.

The gateway is connected to each outdoor unit through a dedicated line communication method such as RS-485, or a local area network (LAN) and the like to transmit and receive data. The gateway 400 is connected to the central control server 300 through a network such as an Internet network to receive an outdoor unit program for outdoor units and indoor units, and receive upgrade data for upgrading the outdoor unit program. Referring to FIG. 2 or 3, in case of an air conditioner configured with a plurality of outdoor units, it may be configured such that one of the outdoor units is operated as a master outdoor unit 200a, and the remaining outdoor units are operated as slave outdoor units 200b. In other words, the plurality of outdoor units 200 may be configured with one or more master outdoor units 200a connected to the gateway through a dedicated line to be upgraded or controlled, and one or more slave outdoor units 200b connected to the master outdoor unit to receive the upgrade data from the master outdoor unit to upgrade the outdoor unit program built therein.

Referring to FIG. 2 or 3, an air conditioner according to an embodiment may include a plurality of indoor units 100 configured to perform air conditioning, and one or more outdoor units 200 connected to the plurality of indoor units to drive the indoor units, and the outdoor unit 200 determines an error occurred while receiving an outdoor unit program for driving the indoor units and the outdoor unit, and requests retransmission of the outdoor unit program when the error has occurred.

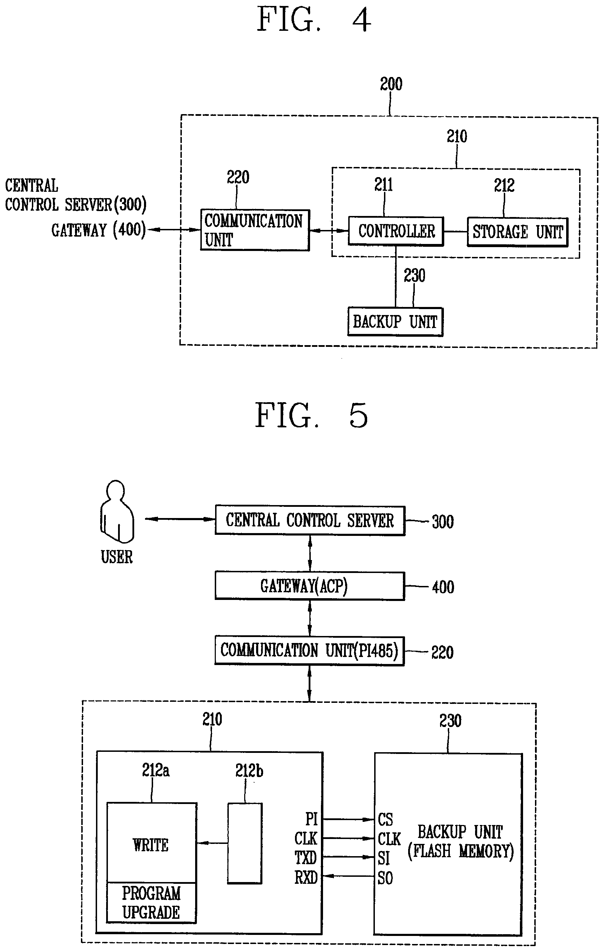

Referring to FIG. 4, the outdoor unit 200 may include a control unit for driving outdoor units and indoor units using an outdoor unit program. The control unit 210 may include a storage unit 212 configured to store the outdoor unit program and upgrade data for the outdoor unit program, and a controller 211 configured to determine a reception error of the outdoor unit program or the upgrade data to drive the indoor units using the outdoor unit program.

The storage unit 212 may store the outdoor unit program and upgrade data. The storage unit 212 can be divided into a region 212a for storing the outdoor unit program or upgrade data and a region for receiving data from other devices as illustrated in FIG. 5 (for example, a backup unit, a communication unit, a controller, etc.) Here, the region 212a may be configured with ROM, and the region 212b may be configured with RAM.

When the central control server 300 controls the outdoor unit 200, the central control server 300 specifies the outdoor unit and then transmits control data to control the relevant outdoor unit. Furthermore, when the central control server 300 upgrades an outdoor unit program provided in the outdoor units, the central control server 300 may transmit upgrade data to all the outdoor units or selectively specify outdoor units to transmit upgrade data to the specified outdoor units. The central control server 300 may transmit upgrade data to all the retrieved outdoor units or the specified outdoor units at the same time.

Furthermore, the upgrade of the outdoor unit program may be also carried out by the gateway 400. The gateway 400 may be connected to the central control server 300 through the Internet, BACnet, LonWalks network or the like to receive upgrade data from the central control server, and transfer data to all or part of the outdoor units subject to upgrade, connected to the gateway 400 or retrieved by the gateway 400.

Referring to FIG. 4 again, the air conditioner may further include a communication unit 220 provided in or connected to the outdoor unit to receive the outdoor unit program or the upgrade data to transmit it to the outdoor unit, and transmit a request signal for requesting retransmission of the outdoor unit program or the upgrade data.

The communication unit 220 performs communication with the gateway 400 using a communication method such as dedicated line communication, plumbing communication, power line communication, and the like, or directly connected to the central control server 300 to perform communication. The communication unit 220 receives a control command, and receives an upgrade command for upgrading the outdoor unit program, and receives upgrade data to transfer it to the outdoor unit. The communication unit 220 may be configured with PI485 as illustrated in FIG. 5 to perform RS-485 dedicated line communication and transmit and receive data.

The controller 211 drives the outdoor unit itself using the outdoor unit program and drives the indoor units connected to the outdoor unit. The controller 211 performs a control command received from the central control server 300 or the like. When the central control server 300 specifies an outdoor unit using a method such as an addressing scheme to transmit a control command, the controller 211 compares its own preset address with an address contained in the control command. When the address contained in the control command is identical to its own address, the controller 211 performs the control command.

The controller 211 performs an upgrade command transmitted from the central control server or gateway. The controller 211 may perform upgrade when the upgrade commands are collectively transmitted to all without specifying the address, but may perform upgrade if the address is identical thereto when the upgrade command is transmitted subsequent to specifying the address.

The controller 211 determines an error occurred while receiving an outdoor unit program or upgrade data for the outdoor unit program. As a result of the determination, when an error has occurred, the controller 211 requests retransmission of the outdoor unit program or upgrade data. At this time, the communication unit 220 transmits a request signal for requesting retransmission of the outdoor unit program or upgrade data to the central control server or gateway. An algorithm for checking a data error such as cyclic redundancy check (CRC), checksum or the like may be used to determine an error of the upgrade command or upgrade data. Furthermore, the communication protocol, data format and the like for transmitting and receiving data are widely known and thus the description thereof will be omitted.

When an upgrade command is received or upgrade data are all received, the controller 211 may generate a response signal to this. At this time, when it is unable to receive a response signal, the gateway 400 or central control server 300 may determine that there is an error in the upgrade command or upgrade data and retransmit the upgrade command.

The air conditioner may further include a backup unit 230 provided in or connected to the outdoor unit to back up the outdoor unit program. At this time, when a reception error or execution error of the outdoor unit program or upgrade data has occurred, the control unit 210 restores it using the outdoor unit program that has been backed up in the backup unit.

Referring to FIGS. 2 through 4 again, an air conditioner according to another embodiment may include a plurality of indoor units 100 configured to perform air conditioning, one or more outdoor units 200 having an outdoor unit program, connected to the plurality of indoor units, to drive the indoor units, and a backup unit 230 provided in or connected to the outdoor unit to back up the outdoor unit program. Here, the outdoor unit 200 determines a reception error or execution error of the outdoor unit program or upgrade data for the outdoor unit program, and when the reception error or execution error has occurred, the outdoor unit program is restored to an outdoor unit program that has been backed up in the backup unit 230.

The backup unit 230 may be provided within the outdoor unit, as an example. A partial area of the storage unit 212 may be assigned to a backup area of the backup unit 230.

For another example, the backup unit 230 may be connected to the outdoor unit 200. In this case, the backup unit 230 may be detachably connected to the outdoor unit 200. Furthermore, the backup unit 230 may have a form such as a flash memory. The backup unit 230 copies and stores the outdoor unit program. The backup unit 230 and the control unit 210 of the outdoor unit may perform serial peripheral interface (SPI) bus communication, for example, as illustrated in FIG. 5. Here, when an error has occurred while receiving upgrade data or executing the outdoor unit program, the controller 211 restores it to an outdoor unit program backed up by the backup unit 230.

For another example, the air conditioner may use the memory of the central control server or gateway as the backup unit 230. In other words, the gateway 400 or central control server 300 may store an outdoor unit program. At this time, when an error has occurred while receiving the upgrade data or executing the outdoor unit program, the control unit 210 transmits an error generation signal to the gateway 400 or central control server 300 through the communication unit 220. Upon receiving the error generation signal, the gateway 400 or central control server 300 retransmits upgrade data or transmits an outdoor unit program that has been backed up and stored in advance.

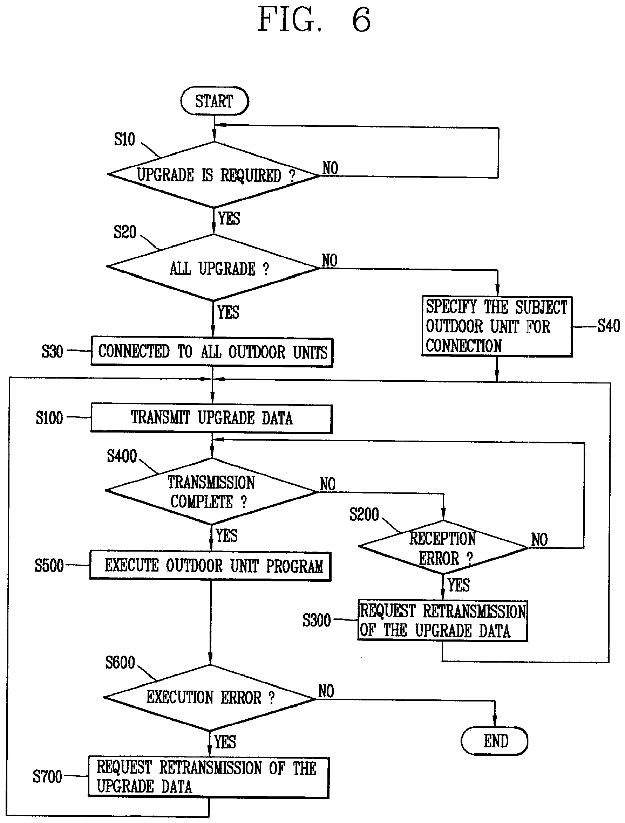

Referring to FIG. 6, in an air conditioning system including an air conditioner including a plurality of indoor units and a plurality of outdoor units configured to drive the indoor units using an outdoor unit program, and a central control server configured to form a communication network with the air conditioner, and control the plurality of outdoor units or upgrade the outdoor unit program, an outdoor unit control method of the air conditioning system according to an embodiment may include allowing the central control server to transmit upgrade data for the outdoor unit program to the outdoor units (S100), allowing the outdoor units to sense a reception error of the upgrade data (S200), and allowing the outdoor units to request retransmission of the upgrade data to the central control server when a reception error of the upgrade data has occurred (S300).

When the central control server controls the outdoor unit, the central control server specifies an outdoor unit, and then transmits control data to control the relevant outdoor unit. Furthermore, the central control server upgrades an outdoor unit program provided in the outdoor units, the upgrade data may be transmitted to all the outdoor units, or transmitted to selectively specified outdoor units (S100). The central control server may transmit upgrade data to all the retrieved outdoor units or specified outdoor units at the same time.

In the air conditioning system further including a gateway provided between the air conditioner and the central control server to upgrade the outdoor unit program using the upgrade data, an outdoor unit control method of the air conditioning system according to another embodiment may include allowing the gateway to receive upgrade data for the outdoor unit program from the central control server, allowing the gateway to transmit the upgrade data to the outdoor units (S100), allowing the outdoor units to sense a reception error of the upgrade data (S200), and allowing the outdoor units to request retransmission of the upgrade data to the gateway when a reception error of the upgrade data has occurred (S300). Hereinafter, the configuration of the device will be described with reference to FIGS. 2 through 5.

The upgrade of the outdoor unit program may be also carried out by the gateway. The gateway may be connected to the central control server through the Internet, BACnet, LonWalks network or the like to receive upgrade data from the central control server, and transfer data to all or part of the outdoor units subject to upgrade, connected to the gateway or retrieved by the gateway (S100).

The outdoor unit is driven by using an outdoor unit program, or drives indoor units connected to the outdoor unit. The outdoor unit performs a control command received from the central control server or the like. When the central control server specifies an outdoor unit using a method such as an addressing scheme to transmit a control command, the relevant outdoor unit compares its own preset address with an address contained in the control command, and when the address contained in the control command is identical to its own address, the outdoor unit performs the control command. The outdoor unit performs an upgrade command transmitted from the central control server or gateway. The outdoor unit may perform upgrade when the upgrade commands are collectively transmitted to all without specifying the address, but may perform upgrade if the address is identical thereto when the upgrade command is transmitted subsequent to specifying the address.

The outdoor unit determines an error occurred while receiving an outdoor unit program or upgrade data for the outdoor unit program (S200). As a result of the determination, when an error has occurred, the outdoor unit requests retransmission of the outdoor unit program or upgrade data (S300). An algorithm for checking a data error such as cyclic redundancy check (CRC), checksum or the like may be used to determine an error of the upgrade command or upgrade data. Whether or not the transmission of upgrade data is completed may be determined by transmitting preset data to each outdoor unit and then analyzing its response signal.

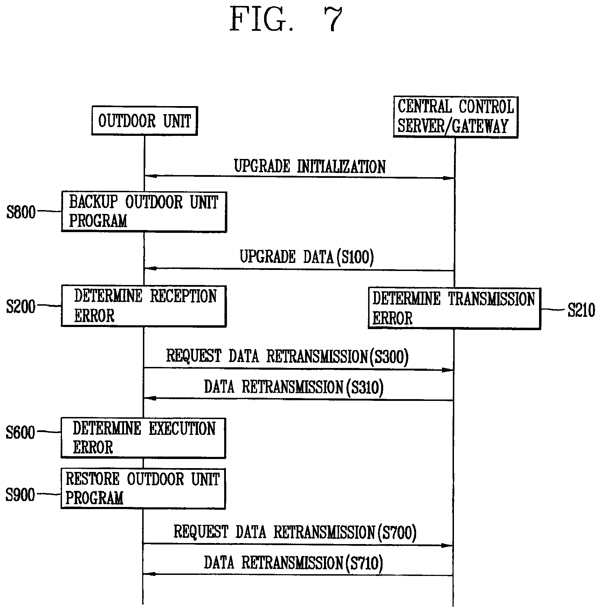

Referring to FIG. 7, an outdoor unit control method according to embodiments may further include allowing the air conditioner to back up the outdoor unit program (S800). Furthermore, the outdoor unit control method may further include allowing the outdoor units to restore the outdoor unit program using the backed up outdoor unit program when a reception error of the upgrade data has occurred (S900).

Furthermore, the outdoor unit control method may further include allowing the outdoor units to execute an upgraded outdoor unit program (S500), and allowing the outdoor units to determine whether or not an execution error has occurred (S600). Referring to FIG. 6, the outdoor unit control method may further include allowing the outdoor units to request retransmission of the upgrade data when the execution error has occurred as a result of the determination (S700). On the other hand, referring to FIG. 7, the outdoor unit control method may further include allowing the outdoor units to restore the outdoor unit program using the backed up outdoor unit program when the execution error has occurred as a result of the determination (S900).

The outdoor unit program may be stored in a partial area of the memory within the outdoor unit. Furthermore, the outdoor unit program may be backed up in an external memory, such as a flash memory, connected to the outdoor unit. The outdoor unit restores it to the backed up outdoor unit program when an error has occurred while receiving the upgrade data or executing the outdoor unit program (S900).

For another example, the air conditioner may back up an outdoor unit program in the memory of the central control server or gateway. In other words, the gateway 400 or central control server 300 may store an outdoor unit program. At this time, when an error has occurred while receiving upgrade data or executing the outdoor unit program, the outdoor unit transmits an error generation signal to the gateway or central control server. Upon receiving the error generation signal, the gateway or central control server may retransmit upgrade data or transmit an outdoor unit program that has been backed up and stored in advance.

As described above, according to an air conditioner, an air conditioning system including the same, and an outdoor unit control method in accordance with the embodiments of the present disclosure, a user or the like may easily upgrade an outdoor unit program without directly visiting the site, and upgrade outdoor unit programs provided in a plurality of outdoor units, respectively at the same time. According to the embodiments of the present disclosure, it may be possible to detect an error occurred while remotely upgrading an outdoor unit program and retransmit or restore the outdoor unit program when the error has occurred. Accordingly, it may be possible to prevent a malfunction of the outdoor unit and air conditioner that can be occurred according to an upgrade failure of the outdoor unit program.

## Claims

1. An air conditioner, comprising:
a plurality of indoor units (100) configured to perform air conditioning; and
one or more outdoor units (200) connected to the plurality of indoor units to drive the indoor units,
wherein each of the one or more outdoor units (200) comprises
a control unit (210) having a controller (211) configured to determine a reception error of an upgrade data to drive the indoor units (100) using an outdoor unit program from a central control server (300) and a storage unit (212) configured to store the outdoor unit program and the upgrade data for the outdoor unit program,
wherein the controller (211) is configured to determine an error occurred while receiving the upgrade data for the outdoor unit program for driving the indoor units and the outdoor unit, and is configured to request retransmission of the upgrade data when the error has occurred,
**characterized in that**
the central control server (300) is configured to transmit upgrade data to all of the one or more outdoor units (200) or to selectively specified outdoor units at the same time, and **in that**
the controller (211) is configured to perform an upgrade when the upgrade data is collectively transmitted to all of the one or more outdoor units (200) without specifying the address, and to perform an upgrade if an address is identical thereto when the upgrade data is transmitted subsequent to specifying the address.

2. The air conditioner of claim 1, further comprising:
a communication unit (220) provided in or connected to the outdoor unit and configured to receive the upgrade data to transmit it to the outdoor unit, and transfer a request signal for requesting retransmission of the upgrade data.

3. The air conditioner of any one of claims 1 and 2, further comprising:
a backup unit (230) provided in or connected to the outdoor unit and configured to back up the outdoor unit program.

4. The air conditioner of claim 3, wherein when a reception error of the upgrade data has occurred, the outdoor unit is configured to restore the outdoor unit program using an outdoor unit program that has been backed up in the backup unit.

5. The air conditioner of claim 1, wherein the central control server is configured to, upon receiving an error generation signal from the control unit (210) which indicates the occurrence of said error, retransmit the upgrade data.

6. The air conditioner of claim 1, further comprising:
a gateway (400) provided between the central control server and the air conditioner, wherein the central control server is configured to directly upgrade the outdoor unit program, or the gateway (400) is configured to receive the upgrade data from the central control server to upgrade the outdoor unit program.

7. The air conditioner of claim 6, wherein the one or more outdoor units (200) comprises a plurality of outdoor units which comprise:
one or more master outdoor units connected to the gateway through a dedicated line to be upgraded or controlled; and
one or more slave outdoor units connected to the master outdoor unit to receive the upgrade data from the master outdoor unit to upgrade an outdoor unit program built therein.

8. An outdoor unit control method of an air conditioning system comprising an air conditioner comprising a plurality of indoor units and one or more outdoor units configured to drive the indoor units using an outdoor unit program, and a central control server configured to form a communication network with the air conditioner, and upgrade the outdoor unit program,
wherein each of the one or more outdoor units (200) comprises a control unit (210) having a controller (211) configured to determine a reception error of an upgrade data to drive the indoor units (100) using an outdoor unit program from the central control server (300) and a storage unit (212) configured to store the outdoor unit program and the upgrade data for the outdoor unit program,
the method comprising:
transmitting upgrade data for the outdoor unit program to the one or more outdoor units (200), by the central control server (200);
sensing a reception error of the upgrade data, by the one or more outdoor units (200); and
requesting retransmission of the upgrade data to the central control server (300) when a reception error of the upgrade data has occurred, by the one or more outdoor units (200),
**characterized in that** the central control server (300) transmits upgrade data to all of the one or more outdoor units (200) or to selectively specified outdoor units at the same time, and **in that** the controller (211) Performs upgrade when the upgrade data is collectively transmitted to all of the one or more outdoor units (200) without specifying the address, and upgrade if an address is identical thereto when the upgrade data is transmitted subsequent to specifying the address.

9. The method of claim 8, further comprising:
backing up, by the air conditioner, the outdoor unit program.

10. The method of claim 8 or 9, further comprising:
restoring, by the one or more outdoor units, the outdoor unit program using the backed up outdoor unit program when a reception error of the upgrade data has occurred.

11. The method of any one of claims 8 through 10, further comprising:
executing, by the one or more outdoor units, an upgraded outdoor unit program;
determining, by the one or more outdoor units, whether or not an execution error has occurred; and
restoring, by the one or more outdoor units, the outdoor unit program using the backed up outdoor unit program when the execution error has occurred as a result of the determination.

12. The method of any one of claims 8 through 11, further comprising:
determining, by the central control server, whether or not a transmission error of the upgrade data has occurred; and
retransmitting, by the central control server, the upgrade data when the transmission error has occurred as a result of the determination.

## Patentansprüche

1. Klimaanlage, die aufweist:
mehrere Inneneinheiten (100), die so konfiguriert sind, dass sie eine Klimatisierung durchführen; und
eine oder mehrere Außeneinheiten (200), die mit den mehreren Inneneinheiten verbunden sind, um die Inneneinheiten anzusteuern,
wobei jede der einen oder mehreren Außeneinheiten (200) aufweist:
eine Steuereinheit (210) mit einer Steuerung (211), die so konfiguriert ist, dass sie einen Empfangsfehler von Aktualisierungsdaten zum Ansteuern der Inneneinheiten (100) unter Verwendung eines Außeneinheitsprogramms von einem zentralen Steuerserver (300) bestimmt, und einer Speichereinheit (212), die so konfiguriert ist, dass sie das Außeneinheitsprogramm und die Aktualisierungsdaten für das Außeneinheitsprogramm speichert,
wobei die Steuerung (211) so konfiguriert ist, dass sie einen Fehler bestimmt, der beim Empfang der Aktualisierungsdaten für das Außeneinheitsprogramm zum Ansteuern der Inneneinheiten und der Außeneinheit aufgetreten ist, und so konfiguriert ist, dass sie eine erneute Übertragung der Aktualisierungsdaten anfordert, wenn der Fehler aufgetreten ist,
**dadurch gekennzeichnet, dass**
der zentrale Steuerserver (300) so konfiguriert ist, dass er Aktualisierungsdaten an alle der einen oder mehreren Außeneinheiten (200) oder an selektiv spezifizierte Außeneinheiten zur gleichen Zeit überträgt, und
dass die Steuerung (211) so konfiguriert ist, dass sie eine Aktualisierung durchführt, wenn die Aktualisierungsdaten kollektiv an alle der einen oder mehreren Außeneinheiten (200) übertragen werden, ohne die Adresse zu spezifizieren, und dass sie eine Aktualisierung durchführt, wenn eine Adresse mit dieser identisch ist, wenn die Aktualisierungsdaten nach der Spezifizierung der Adresse übertragen werden.

2. Klimaanlage nach Anspruch 1, die ferner aufweist:
eine Kommunikationseinheit (220), die in der Außeneinheit vorgesehen oder mit ihr verbunden ist und so konfiguriert ist, dass sie die Aktualisierungsdaten empfängt, um sie an die Außeneinheit zu übertragen, und ein Anforderungssignal zur Anforderung einer erneuten Übertragung der Aktualisierungsdaten überträgt.

3. Klimaanlage nach einem der Ansprüche 1 und 2, die ferner aufweist:
eine Sicherungseinheit (230), die in der Außeneinheit vorgesehen oder mit ihr verbunden ist und so konfiguriert ist, dass sie das Außeneinheitsprogramm sichert.

4. Klimaanlage nach Anspruch 3, wobei, wenn ein Empfangsfehler der Aktualisierungsdaten aufgetreten ist, die Außeneinheit so konfiguriert ist, dass sie das Außeneinheitsprogramm unter Verwendung eines Außeneinheitsprogramms, das in der Sicherungseinheit gesichert wurde, wiederherstellt.

5. Klimaanlage nach Anspruch 1, wobei der zentrale Steuerserver so konfiguriert ist, dass er bei Empfang eines Fehlererzeugungssignals von der Steuereinheit (210), das das Auftreten des Fehlers anzeigt, die Aktualisierungsdaten erneut überträgt.

6. Das Klimaanlage nach Anspruch 1, die ferner aufweist:
ein Gateway (400), das zwischen dem zentralen Steuerserver und der Klimaanlage vorgesehen ist, wobei der zentrale Steuerserver so konfiguriert ist, dass er das Außeneinheitsprogramm direkt aktualisiert, oder das Gateway (400) so konfiguriert ist, dass es die Aktualisierungsdaten von dem zentralen Steuerserver empfängt, um das Außeneinheitsprogramm zu aktualisieren.

7. Klimaanlage nach Anspruch 6, wobei die eine oder die mehreren Außeneinheiten (200) mehrere Außeneinheiten aufweisen, die aufweisen:
eine oder mehrere Haupt-Außeneinheiten, die über eine zugeordnete Leitung mit dem Gateway verbunden sind, um aktualisiert oder gesteuert zu werden; und
eine oder mehrere Neben-Außeneinheiten, die mit der Haupt-Außeneinheit verbunden sind, um die Aktualisierungsdaten von der Haupt-Außeneinheit zu empfangen, um ein darin enthaltenes Außeneinheitsprogramm zu aktualisieren.

8. Verfahren zur Steuerung einer Außeneinheit eines Klimaanlagensystems, das eine Klimaanlage aufweist, die mehrere Inneneinheiten und eine oder mehrere Außeneinheiten, die so konfiguriert sind, dass sie die Inneneinheiten unter Verwendung eines Außeneinheitsprogramms ansteuern, und einen zentralen Steuerserver aufweist, der so konfiguriert ist, dass er ein Kommunikationsnetzwerk mit der Klimaanlage bildet, und das Außeneinheitsprogramm aktualisiert,
wobei jede der einen oder mehreren Außeneinheiten (200) eine Steuereinheit (210) mit einer Steuerung (211), die so konfiguriert ist, dass sie einen Empfangsfehler von Aktualisierungsdaten zum Ansteuern der Inneneinheiten (100) unter Verwendung eines Außeneinheitsprogramms von dem zentralen Steuerserver (300) bestimmt, und einer Speichereinheit (212) aufweist, die so konfiguriert ist, dass sie das Außeneinheitsprogramm und die Aktualisierungsdaten für das Außeneinheitsprogramm speichert,
wobei das Verfahren aufweist:
Übertragen von Aktualisierungsdaten für das Außeneinheitsprogramm an die eine oder mehreren Außeneinheiten (200) durch den zentralen Steuerserver (300);
Erfassen eines Empfangsfehlers der Aktualisierungsdaten durch die eine oder mehreren Außeneinheiten (200); und
Anfordern einer erneuten Übertragung der Aktualisierungsdaten an den zentralen Steuerserver (300), wenn ein Empfangsfehler der Aktualisierungsdaten aufgetreten ist, durch die eine oder mehreren Außeneinheiten (200),
**dadurch gekennzeichnet, dass**
der zentrale Steuerserver (300) Aktualisierungsdaten an alle der einen oder mehreren Außeneinheiten (200) oder an selektiv spezifizierte Außeneinheiten zur gleichen Zeit überträgt, und
dass die Steuerung (211) eine Aktualisierung durchführt, wenn die Aktualisierungsdaten kollektiv an alle der einen oder mehreren Außeneinheiten (200) übertragen werden, ohne die Adresse zu spezifizieren, und eine Aktualisierung durchführt, wenn eine Adresse mit dieser identisch ist, wenn die Aktualisierungsdaten nach der Spezifizierung der Adresse übertragen werden.

9. Verfahren nach Anspruch 8, das ferner aufweist:
Sichern des Außeneinheitsprogramms durch die Klimaanlage.

10. Verfahren nach Anspruch 8 oder 9, das ferner aufweist:
Wiederherstellen des Außeneinheitsprogramms durch die eine oder mehreren Außeneinheiten unter Verwendung des gesicherten Außeneinheitsprogramms, wenn ein Empfangsfehler der Aktualisierungsdaten aufgetreten ist.

11. Verfahren nach einem der Ansprüche 8 bis 10, das ferner aufweist:
Ausführen eines aktualisierten Außeneinheitsprogramms durch die eine oder mehreren Außeneinheiten;
Bestimmen, ob ein Ausführungsfehler aufgetreten ist oder nicht, durch die eine oder mehreren Außeneinheiten; und
Wiederherstellen des Außeneinheitsprogramms durch die eine oder mehreren Außeneinheiten unter Verwendung des gesicherten Außeneinheitsprogramms, wenn der Ausführungsfehler als Ergebnis der Bestimmung aufgetreten ist.

12. Verfahren nach einem der Ansprüche 8 bis 11, das ferner aufweist:
Bestimmen, ob ein Übertragungsfehler der Aktualisierungsdaten aufgetreten ist oder nicht, durch den zentralen Steuerserver; und
erneutes Übertragen der Aktualisierungsdaten durch den zentralen Steuerserver, wenn der Übertragungsfehler als Ergebnis der Bestimmung aufgetreten ist.

## Revendications

1. Appareil de climatisation, comprenant :
une pluralité d'unités intérieures (100) conçues pour mettre en oeuvre une climatisation ; et
une ou plusieurs unités extérieures (200) connectées aux unités de la pluralité d'unités intérieures pour piloter les unités intérieures,
dans lequel chacune de la ou des unités extérieures (200) comprend
une unité de commande (210) comportant un organe de commande (211) configuré pour déterminer une erreur de réception de données de mise à niveau pour piloter les unités intérieures (100) au moyen d'un programme d'unité extérieure provenant d'un serveur central de commande (300) et une unité de mémorisation (212) configurée pour mémoriser le programme d'unité extérieure et les données de mise à niveau du programme d'unité extérieure,
dans lequel l'organe de commande (211) est configuré pour déterminer une erreur qui s'est produite pendant une réception des données de mise à niveau du programme d'unité extérieure permettant de commander les unités intérieures et l'unité extérieure, et est configuré pour demander une retransmission des données de mise à niveau lorsque l'erreur s'est produite,
**caractérisé en ce que**
le serveur central de commande (300) est configuré pour transmettre des données de mise à niveau à toutes les unités de la ou des unités extérieures (200) ou à des unités extérieures sélectivement spécifiées simultanément, et
**en ce que** l'organe de commande (211) est configuré pour mettre en oeuvre une mise à niveau lorsque les données de mise à niveau sont transmises collectivement à toutes les unités de la ou des unités extérieures (200) sans spécifier l'adresse, et pour mettre en oeuvre une mise à niveau si une adresse est identique à l'adresse spécifiée lorsque les données de mise à niveau sont transmises à la suite d'une spécification de l'adresse.

2. Appareil de climatisation selon la revendication 1, comprenant en outre :
une unité de communication (220) disposée dans l'unité extérieure, ou connectée à cette dernière, et configurée pour recevoir les données de mise à niveau de façon à les transmettre à l'unité extérieure, et pour transférer un signal de demande destiné à demander une retransmission des données de mise à niveau.

3. Appareil de climatisation selon l'une ou l'autre des revendications 1 et 2, comprenant en outre :
une unité de sauvegarde (230) disposée dans l'unité extérieure, ou connectée à cette dernière, et configurée pour sauvegarder le programme d'unité extérieure.

4. Appareil de climatisation selon la revendication 3, dans lequel, lorsqu'une erreur de réception des données de mise à niveau s'est produite, l'unité extérieure est configurée pour restaurer le programme d'unité extérieure au moyen d'un programme d'unité extérieure qui a été sauvegardé dans l'unité de sauvegarde.

5. Appareil de climatisation selon la revendication 1, dans lequel le serveur central de commande est configuré, lors d'une réception d'un signal de génération d'erreur en provenance de l'unité de commande (210) qui indique l'occurrence de ladite erreur, pour retransmettre les données de mise à niveau.

6. Appareil de climatisation selon la revendication 1, comprenant en outre :
une passerelle (400) disposée entre le serveur central de commande et l'appareil de climatisation, dans lequel le serveur central de commande est configuré pour mettre directement à niveau le programme d'unité extérieure, ou la passerelle (400) est configurée pour recevoir les données de mise à niveau en provenance du serveur central de commande pour mettre à niveau le programme d'unité extérieure.

7. Appareil de climatisation selon la revendication 6, dans lequel la ou les unités extérieures (200) comprennent une pluralité d'unités extérieures qui comprennent :
une ou plusieurs unités extérieures maîtresses connectées à la passerelle par l'intermédiaire d'une ligne dédiée à mettre à niveau ou à commander ; et
une ou plusieurs unités extérieures esclaves connectées à l'unité extérieure maîtresse pour recevoir les données de mise à niveau en provenance de l'unité extérieure maîtresse pour mettre à jour un programme d'unité extérieure intégré en son sein.

8. Procédé de commande d'unité extérieure d'un système de climatisation comprenant un appareil de climatisation comprenant une pluralité d'unités intérieures et une ou plusieurs unités extérieures configurées pour piloter les unités intérieures au moyen d'un programme d'unité extérieure, et un serveur central de commande configuré pour former un réseau de communication avec l'appareil de climatisation, et pour mettre à jour le programme d'unité extérieure,
dans lequel chacune de la ou des unités extérieures (200) comprend une unité de commande (210) comportant un organe de commande (211) configuré pour déterminer une erreur de réception de données de mise à niveau pour piloter les unités intérieures (100) au moyen d'un programme d'unité extérieure provenant du serveur central de commande (300) et une unité de mémorisation (212) configurée pour mémoriser le programme d'unité extérieure et les données de mise à niveau du programme d'unité extérieure,
le procédé comprenant les étapes consistant à :
transmettre des données de mise à niveau du programme d'unité extérieure à la ou aux unités extérieures (200), par le serveur central de commande (300) ;
détecter une erreur de réception des données de mise à niveau, par la ou les unités extérieures (200) ; et
demander une retransmission des données de mise à niveau au serveur central de commande (300) lorsqu'une erreur de réception des données de mise à niveau s'est produite, par la ou les unités extérieures (200),
**caractérisé en ce que** le serveur central de commande (300) transmet des données de mise à niveau à toutes les unités de la ou des unités extérieures (200) ou à des unités extérieures sélectivement spécifiées simultanément, et
**en ce que** l'organe de commande (211) met en oeuvre une mise à niveau lorsque les données de mise à niveau sont transmises collectivement à toutes les unités de la ou des unités extérieures (200) sans spécifier l'adresse, et une mise à niveau si une adresse est identique à l'adresse spécifiée lorsque les données de mise à niveau sont transmises à la suite d'une spécification de l'adresse.

9. Procédé selon la revendication 8, comprenant en outre l'étape consistant à :
sauvegarder, par l'appareil de climatisation, le programme d'unité extérieure.

10. Procédé selon la revendication 8 ou 9, comprenant en outre l'étape consistant à :
restaurer, par la ou les unités extérieures, le programme d'unité extérieure au moyen du programme d'unité extérieure sauvegardé lorsqu'une erreur de réception des données de mise à niveau s'est produite.

11. Procédé selon l'une quelconque des revendications 8 à 10, comprenant en outre les étapes consistant à :
exécuter, par la ou les unités extérieures, un programme d'unité extérieure mis à niveau ;
déterminer, par la ou les unités extérieures, si une erreur d'exécution s'est, ou non, produite ; et
restaurer, par la ou les unités extérieures, le programme d'unité extérieure au moyen du programme d'unité extérieure sauvegardé lorsque l'erreur d'exécution s'est produite consécutivement à la détermination.

12. Procédé selon l'une quelconque des revendications 8 à 11, comprenant en outre les étapes consistant à :
déterminer, par le serveur central de commande, si une erreur de transmission des données de mise à niveau s'est, ou non, produite ; et
retransmettre, par le serveur central de commande, les données de mise à niveau lorsque l'erreur de transmission s'est produite consécutivement à la détermination.
